# EUROPEAN PATENT APPLICATION

(11) **EP 4 831 120 A1**
(43) Date of publication of application: **28.10.2026**
(21) Application number: 24908052.4
(22) Date of filing: 18.12.2024
(51) Int. Cl.: C01B 32/05, C01G 53/00, C01B 35/04

(54) **METHOD FOR DISSOLVING ATOMS IN METAL**

(30) Priority: 18.12.2023 KR 20230184624; 17.12.2024 KR 20240188252
(71) Applicant: Institute for Basic Science, Yuseong-gu Daejeon 34126 (KR); Ulsan National Institute of Science and Technology, Ulju-gun, Ulsan 44919 (KR)
(72) Inventor: RODNEY, Ruoff, Daejeon 34126 (KR)
(74) Representative: Kraus & Lederer PartGmbB
(86) International application number: PCT/KR2024/020572
(87) International publication number: WO 2025/135769

(57) **Abstract**

The present invention relates to a method for dissolving atoms in a metal, and provides a method for easily dissolving atoms in a metal having low solubility for the atoms by using, as a mediator, a metal which has high solubility for the atoms. Thus, elements such as carbon (C), boron (B), and nitrogen (N) can be stably introduced into metals in which these elements cannot be dissolved by using existing techniques or have very low solubility, thereby enabling the synthesis of new compounds and doped metals or alloys, resulting in improved physical properties of a metal, for example, properties such as strength, corrosion resistance, and conductivity.

## Description

### [Technical Field]

The present invention relates to a method for dissolving atoms in a metal.

### [Background Art]

A technology for introducing an element such as carbon, boron, or nitrogen to a metal is mainly utilized in materials science, semiconductors, superconductors, electronic industry, and the like. For example, when carbon is introduced to a metal, strength and corrosion resistance are increased to allow manufacture of an alloy such as steel, and boron and nitrogen play an important role in developing semiconductor devices and superconductors. The technology has the potential to develop even more innovative materials by introducing carbon (C), boron (B), and nitrogen (N) to an existing material (e.g., diamond, graphite, hexagonal boron nitride, cubic boron nitride, and the like) in a new way, as well as synthesis of a metal and alloy doped with a new compound.

In the conventional technology, there is a difficulty in dissolving elements such as carbon, boron, and nitrogen in most of the metals. Carbon is dissolved in metals such as iron (Fe), but is hardly dissolved in metals such as copper (Cu) and gold (Au). Thus, limitations were reached in making a new material or improving the physical properties of metals by introducing elements to various metals. In particular, there is a critical disadvantage in that it is difficult to effectively introduce elements to metals with low solubility or in which the elements are not dissolved at all.

Therefore, development and research of a new dissolution and doping technology which may easily introduce elements such as carbon, boron, and nitrogen to various metals are urgently needed.

### [Disclosure]

### [Technical Problem]

In order to solve the above problems, an object of the present invention is to provide a method for easily dissolving atoms or carbon anions in metals with low solubility of the atoms or carbon anions therein.

### [Technical Solution]

In order to achieve the above object, the present inventors conducted continuous research in order to develop a method for easily dissolving atoms in a metal with low solubility of the atoms therein, and as a result, found that when a metal with high solubility of atoms therein is used as a mediator, atoms may move from the metal with high solubility and be stably transferred even to a metal with low solubility or insolubility of the atom, and thus, a new compound or doped alloy may be synthesized from various metals, thereby completing the present invention.

In one general aspect, a method for dissolving atoms in a metal includes: (a) dissolving atoms in a first metal; and (b) mixing the first metal in which atoms are dissolved and a second metal or bringing them into contact to dissolve the atoms in the second metal, wherein the atom is carbon, nitrogen, or boron, and the atom is soluble in the first metal and insoluble in the second metal.

According to an exemplary embodiment, step (a) may be bringing the first metal and an atom source into contact, the first metal may be a solid phase, and the atom source may be a gas containing the atoms, and according to the exemplary embodiment, when the atom is carbon, the atom source may be a hydrocarbon gas.

According to an exemplary embodiment, in the case of performing the mixing in step (b), when the second metal is a liquid phase, the second metal may be a metal alloyable with the first metal.

According to an exemplary embodiment, when the atom is carbon, the first metal may be any one or more selected from the group consisting of Ni, Fe, Co, Mn, and the like, and the second metal may be any one or more selected from the group consisting of Hg, Ga, Sn, In, Sb, Th, As, Ba, Bi, Br, Cd, Cs, K, Na, P, Rb, Sr, Te, Tl, Zn, Cu, Au, Ag, Ge, Pb, and the like.

According to an exemplary embodiment, in the case of performing the contact in step (b), the first metal may be a solid phase, the second metal may be a liquid phase, and the first and second metals may not form an alloy.

According to an exemplary embodiment, when the atom is carbon, the first metal may be any one or more selected from the group consisting of Ni, Fe, Co, Mn, Mo, Ti, V, Hf, Sc, Ta, La, Ce, and the like, and the second metal may be any one or more selected from the group consisting of In, Sn, Li, Na, K, Pb, and the like.

According to an exemplary embodiment, when the atom is boron, the first metal may be any one or more selected from the group consisting of Ni, Co, Fe, Mn, and the like, and the second metal may be any one or more selected from the group consisting of Ag, Au, Bi, Ge, Pb, Sb, Sn, Te, Tl, Zn, As, Br, Cs, In, K, Na, P, Rb, Sr, and the like.

According to an exemplary embodiment, when the atom is nitrogen, the first metal may be any one or more selected from the group consisting of Fe, Al, Ti, Cr, W, and the like, and the second metal may be any one or more selected from the group consisting of Ag, As, Au, Ba, Be, Bi, (C), Cd, Cs, Cu, Ge, Hg, Ir, K, Na, P, Pb, Pd, Pt, Re, Rh, Ru, S, Sb, Sc, Se, Sn, Sr, Te, TI, Zn, La, Ce, and the like.

### [Advantageous Effects]

The method for dissolving atoms in a metal of the present invention provides a method for easily dissolving atoms in a metal with low solubility of the atom therein using a metal with high solubility of the atom therein. Thus, elements such as carbon (C), boron (B), and nitrogen (N) may be stably introduced into metals in which the elements are not dissolved using existing techniques or the elements have very low solubility, thereby allowing synthesis of new compounds and doped metals or alloys, and thus, improving physical properties, for example, strength, corrosion resistance, and conductivity of the metal.

In addition, the dissolution method according to an exemplary embodiment allows development of various new materials and chemicals, which was not allowed by existing synthesis methods, by adding the elements to existing materials (e.g., diamond, graphite, hexagonal boron nitride, and the like) in a new way. Since the introduced elements may impart new properties to the metal or alloy in a process of cooling at a high temperature, very promising application possibilities may be presented in fields such as material engineering and development of semiconductors and superconductors.

### [Description of Drawings]

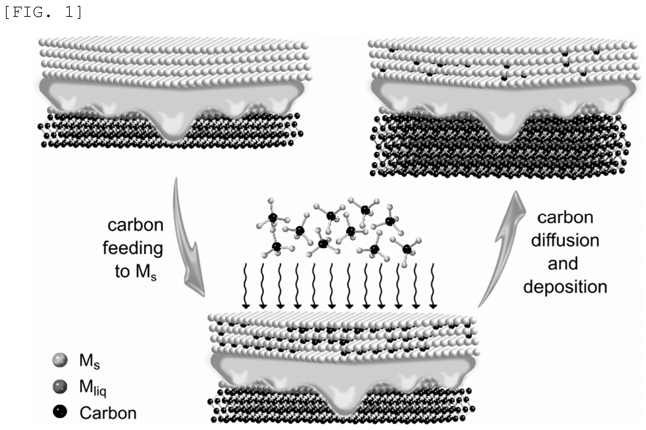

FIG. 1 is a schematic diagram simply showing the method for dissolving atoms in a metal according to an exemplary embodiment. Ms is a solid metal, and Mliq is a liquid metal.

### [Best Mode]

Hereinafter, the present invention will be described in more detail. However, the following specific examples or exemplary embodiments are only a reference for describing the present invention in detail, and the present invention is not limited thereto, and may be implemented in various forms.

In addition, unless otherwise defined, all technical terms and scientific terms have the same meanings as those commonly understood by one of those skilled in the art to which the present invention pertains. The terms used herein are only for effectively describing a certain specific example and are not intended to limit the present invention.

In addition, the singular form used in the specification and claims appended thereto may be intended to include a plural form also, unless otherwise indicated in the context.

In addition, units used in the present specification without particular mention are based on weights, and as an example, a unit of % or ratio refers to a wt% or a weight ratio, and wt% refers to wt% of any one component in a total composition, unless otherwise defined.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the specification of the present invention, values which may be outside a numerical range due to experimental error or rounding off of a value are also included in the defined numerical range.

The "metal with low solubility" refers to a metal with a solubility of atoms or carbon anions of less than 0.01 atom%.

The term "comprise" described in the present specification is an open-ended description having a meaning equivalent to the term such as "is/are provided", "contain", "have", or "is/are characterized", and does not exclude elements, materials or processes which are not further listed.

Hereinafter, the present invention will be described in detail.

The present invention provides a method for dissolving atoms in a metal including: (a) dissolving atoms in a first metal; and (b) mixing the first metal in which the atoms are dissolved and a second metal or bringing them into contact to dissolve the atoms in the second metal. Specifically, the atom may be carbon, nitrogen, or boron, and the atoms may be soluble in the first metal and insoluble in the second metal. The dissolution method may easily dissolve carbon, nitrogen, or boron atoms in the second metal with insolubility or low solubility of the atoms therein.

According to an exemplary embodiment, the solubility of atom may be higher in the first metal than in the second metal, and the solubility of the atom may be more than 0.1 atom% or 0.2 atom% or more.

According to an exemplary embodiment, the atom may be insoluble or have low solubility in the second metal, and specifically, the solubility of the atom may be less than 0.01 atom%.

The definition of solubility and insolubility of atoms in a metal in the present invention may be commonly known or published, and the solubility, dissolubility, and insolubility of atoms may be determined by referring to experimental data of known documents. As an example, the solubility/insolubility of an atom in a metal may be determined by analyzing phase stability at specific temperatures and compositions, using thermodynamic analysis, dissolution experiment, Pourbaix diagram, electrochemical method, chemical analysis, molecular dynamic simulation, or phase diagram.

According to an exemplary embodiment, step (a) may use a common or known method for dissolving atoms in a first metal. A non-limiting example may include a solid phase diffusion method of applying a specific element on a metal surface at a high temperature to infiltrate the element into the metal, a melting and injecting method of making a metal into a molten state, adding a specific element, and mixing, and a heat treatment method of applying a high-temperature heat treatment for adsorbing atoms on a metal surface. In addition, an ion injection technology of injecting specific elements on a metal surface using a high-energy ion beam, chemical vapor deposition (CVD) of reacting gas including specific elements at a high temperature to deposit the elements on a metal surface, and physical vapor deposition (PVD) of physically depositing through evaporation or sputtering may be used, but the present invention is not limited thereto.

According to an exemplary embodiment, in the step (a), the first metal and an atom source may be brought into contact in order to dissolve atoms in the first metal. The contact method may be easily adjusted depending on the phase of the first metal and the atom source. As an example, when the first metal is a solid phase and the atom source is a gas phase, a gaseous atom source atmosphere is created on the surface of the first metal to bring them into contact. Otherwise, when the first metal is a solid phase and the atom source is a liquid phase, the first metal is dipped into a liquid atom source or the atom source is applied on the surface of the first metal to bring them into contact.

According to an exemplary embodiment, the first metal may be a liquid phase or a solid phase, specifically a solid phase. In addition, the first metal may be present in various forms such as particles, nanoparticles, wire, nanowire rod, and foil.

According to an exemplary embodiment, the atom source may be a gas phase, a liquid phase, or a solid phase containing carbon, nitrogen, or boron atoms. Specifically, the atom source may be a gas compound containing the atoms.

According to an exemplary embodiment, when the atom is carbon, the atom source may be a hydrocarbon gas, specifically a C 1-15 or C1-7 hydrocarbon gas such as methane (CH₄), propane (C₃H₈), butane (C₄H₁₀), ethylene (C₂H₄), and acetylene (C₂H₂). Otherwise, the atom source may be a hydrocarbon compound such as benzene (C₆H₆), toluene (C₇H₈), and xylene (C₈H₁₀), and a carbon body such as graphite, activated carbon, silicon carbide, and carbon black, but is not limited thereto.

According to an exemplary embodiment, when the atom is nitrogen, the atom source may be a nitrogen-containing gas such as nitrogen gas (N₂), ammonia (NH₃), and nitrous oxide (N₂O), or liquid ammonia (NH₃), liquid nitrogen (N₂), hydrazine (H₂N₂), ammonium nitrate (NH₄NO₃), sodium nitrite (NaNO₂), sodium nitrate (NaNO₃), and the like, but is not limited thereto.

According to an exemplary embodiment, when the atom is boron, boron trifluoride (BF₃), boron trichloride (BCl₃), boron hydride (B₂H₆), boric acid (H₃BO₃), boron alkoxide, boron triethyl (B(C₂H₅)₃), elemental boron, boric acid (H₃BO₃), boron nanoparticles, and the like may be used, but the present invention is not limited thereto.

According to an exemplary embodiment, the step (b) may be a step of moving atoms in the first metal in which atoms produced in step (a) are dissolved into the second metal.

According to an exemplary embodiment, the step (b) may be mixing the first metal in which the atoms are dissolved and the second metal to dissolve the atoms in the second metal. Specifically, when the mixing is selected, the second metal may be a liquid phase, and in this case, the second metal may be a metal alloyable with the first metal.

According to an exemplary embodiment, when the atom is carbon, the first metal in which carbon is dissolved and the second metal may be mixed, in which the second metal may be a liquid phase and a metal alloyable with the first metal. Specifically, the first metal may be any one or more selected from the group consisting of Ni, Fe, Co, Mn, and the like, and the second metal may be any one or more selected from the group consisting of Hg, Ga, Sn, In, Sb, Th, As, Ba, Bi, Br, Cd, Cs, K, Na, P, Rb, Sr, Te, Tl, Zn, Cu, Au, Ag, Ge, Pb, and the like.

According to another exemplary embodiment, the step (b) may be bringing the first metal in which the atoms are dissolved and the second metal into contact to dissolve the atoms in the second metal. Specifically, when the contact process is selected, the first metal may be a solid phase and the second metal may be a liquid phase, and the first metal and the second metal may not form an alloy.

According to an exemplary embodiment, when the atom is carbon, the first metal in which carbon is dissolved and the second metal may be brought into contact, in which the first metal may be a solid phase, the second metal may be a liquid phase, and the first metal and the second metal may not form an alloy. Specifically, the first metal may be any one or more selected from the group consisting of Ni, Fe, Co, Mn, Mo, Ti, V, Hf, Sc, Ta, La, Ce, and the like, and the second metal may be any one or more selected from the group consisting of In, Sn, Li, Na, K, Pb, and the like.

According to an exemplary embodiment, when the atom is boron, the first metal may be any one or more selected from the group consisting of Ni, Co, Fe, Mn, and the like, and the second metal may be any one or more selected from the group consisting of Ag, Au, Bi, Ge, Pb, Sb, Sn, Te, Tl, Zn, As, Br, Cs, In, K, Na, P, Rb, Sr, and the like.

According to an exemplary embodiment, when the atom is nitrogen, the first metal may be any one or more selected from the group consisting of Fe, Al, Ti, Cr, W, and the like, and the second metal may be any one or more selected from the group consisting of Ag, As, Au, Ba, Be, Bi, (C), Cd, Cs, Cu, Ge, Hg, Ir, K, Na, P, Pb, Pd, Pt, Re, Rh, Ru, S, Sb, Sc, Se, Sn, Sr, Te, TI, Zn, La, Ce, and the like.

Hereinafter, the present invention will be described in more detail with reference to the following examples. However, the following examples are only an example for describing the present invention in more detail, and do not limit the present invention in any way.

### [Method for evaluating physical properties]

### 1. Evaluation of solubility

In order to evaluate the solubility of elements or carbon anions and metals, or solubility (alloyability) between metals, evaluation was performed based on a binary phase diagram between components.

### [Example 1]

A Ni foil having a (111) surface was fixed on two copper electrodes in a chamber and slowly heated to 1100°C by resistance heating (joule heating) for 1 hour in a mixed gas flow atmosphere of 50 sccm of H₂ and 50 sccm of Ar under atmospheric pressure (760 Torr). Subsequently, carbon was dissolved in the Ni foil at a temperature of 1100°C for 1 hour so that CH₃ diluted in Ar (0.3%) flowed at 20 sccm, thereby producing a Ni111(C)Ni foil containing 1.0 atom% of carbon (C) in which a C atom is positioned on an octahedral void of Ni.

The above-produced Ni111(C)Ni foil and a Sn pellet were added to a graphite crucible connected to a copper electrode, and heated to a temperature of 1000°C for 1 hour under an Ar atmosphere to finally obtain an alloy in which carbon atoms were dissolved (1:100:10000 (atom%) (=C:Ni:Sn), atomic ratio).

### [Example 2]

In a chamber, a Na metal layer (Mliq) was placed on a flat graphite plate, and a Ni foil (Ms) having a (111) surface was then placed thereon. Subsequently, the Ni foil fixed to two copper electrodes was heated at a temperature of 500°C under an Ar atmosphere for 4 hours by a resistance heating (Joule heating) method. Cooling was performed by blocking current, and it was confirmed that the thickness of a graphite plate layer positioned under the Na metal layer was thickened.

As shown in FIG. 1, in Example 2, the Ni foil was used as Ms, and the Na metal layer was able to be continuously supplied with carbon (C) diffused through the Ni foil. The Ni foil (Ms) was not mixed with liquid Na (Mliq), and the C atoms were diffused through a thin Mliq layer to grow new diamond from a diamond single crystal or grow new carbon from other carbon allotropes or other substrates.

Therefore, the method for dissolving atoms in a metal according to an exemplary embodiment of the present invention was confirmed to have a possibility of synthesis of a new material by injecting carbon (C), boron (B), or nitrogen (N) atom into a metal in which the atom is generally insoluble. In addition, the method may produce a metal or alloy doped with a new compound by previously loading or continuously supplying carbon to a metal thin plate and may be widely applied to various industrial fields including materials science and chemistry.

The above description is only an example to which the principles of the present disclosure is applied, other constituents may be further included without departing from the scope of the present disclosure, the present invention is not limited by the description, and various modifications and transformations are possible by a person with ordinary knowledge in the art to which the present invention belongs from the description.

Therefore, the spirit of the present invention should not be limited to the above description, and the following claims as well as all modifications equal or equivalent to the claims are intended to fall within the scope and spirit of the invention

## Claims

1. A method for dissolving atoms in a metal, the method comprising:
(a) dissolving atoms in a first metal; and
(b) mixing the first metal in which atoms are dissolved and a second metal or bringing them into contact to dissolve the atoms in the second metal,
wherein the atom is carbon, nitrogen, or boron, and
the atom is soluble in the first metal and insoluble in the second metal.

2. The method for dissolving atoms in a metal of claim 1, wherein (a) is bringing the first metal and an atom source into contact, the first metal is a solid phase, and the atom source is a gas compound containing the atoms.

3. The method for dissolving atoms in a metal of claim 2, wherein when the atom is carbon, the atom source is a hydrocarbon gas.

4. The method for dissolving atoms in a metal of claim 1, wherein in the case of performing the mixing in (b), when the second metal is a liquid phase, the second metal is a metal alloyable with the first metal.

5. The method for dissolving atoms in a metal of claim 4, wherein when the atom is carbon, the first metal is any one or more selected from the group consisting of Ni, Fe, Co, and Mn, and the second metal is any one or more selected from the group consisting of Hg, Ga, Sn, In, Sb, Th, As, Ba, Bi, Br, Cd, Cs, K, Na, P, Rb, Sr, Te, Tl, Zn, Cu, Au, Ag, Ge, and Pb.

6. The method for dissolving atoms in a metal of claim 1, wherein in the case of performing the contact in (b), the first metal is a solid phase, the second metal is a liquid phase, and the first metal and the second metal do not form an alloy.

7. The method for dissolving atoms in a metal of claim 6, wherein when the atom is carbon, the first metal is any one or more selected from the group consisting of Ni, Fe, Co, Mn, Mo, Ti, V, Hf, Sc, Ta, La, and Ce, and the second metal is any one or more selected from the group consisting of In, Sn, Li, Na, K, and Pb.

8. The method for dissolving atoms in a metal of claim 1, wherein when the atom is boron, the first metal is any one or more selected from the group consisting of Ni, Co, Fe, and Mn, and the second metal is any one or more selected from the group consisting of Ag, Au, Bi, Ge, Pb, Sb, Sn, Te, Tl, Zn, As, Br, Cs, In, K, Na, P, Rb, and Sr.

9. The method for dissolving atoms in a metal of claim 1, wherein when the atom is nitrogen, the first metal is any one or more selected from the group consisting of Fe, Al, Ti, Cr, and W, and the second metal is any one or more selected from the group consisting of Ag, As, Au, Ba, Be, Bi, (C), Cd, Cs, Cu, Ge, Hg, Ir, K, Na, P, Pb, Pd, Pt, Re, Rh, Ru, S, Sb, Sc, Se, Sn, Sr, Te, Tl, Zn, La, and Ce.
